# EUROPEAN PATENT APPLICATION

(11) **EP 4 450 580 A1**
(43) Date of publication of application: **23.10.2024**
(21) Application number: 22949827.4
(22) Date of filing: 07.07.2022
(51) Int. Cl.: C09J 125/10, C09J 133/06, C08F 257/02, C08F 236/10, C08F 212/08, C08F 220/14, C08F 220/06, H01M 4/62, H01M 10/0525

(54) **BINDER, BINDER COMPOSITION, PREPARATION METHOD, NEGATIVE ELECTRODE SLURRY, NEGATIVE ELECTRODE SHEET, SECONDARY BATTERY, BATTERY MODULE, BATTERY PACK, AND ELECTRIC APPARATUS**

(71) Applicant: Contemporary Amperex Technology (Hong Kong) Limited, Central, Central And Western District (HK)
(72) Inventor: CHEN, Shuhua, Ningde, Fujian 352100 (CN); LIU, Huihui, Ningde, Fujian 352100 (CN); WANG, Xinghui, Ningde, Fujian 352100 (CN); ZHANG, Wenmeng, Ningde, Fujian 352100 (CN)
(74) Representative: Kraus & Lederer PartGmbB
(86) International application number: PCT/CN2022/104329
(87) International publication number: WO 2024/007242

(57) **Abstract**

The present application relates to a binder, a binder composition, a preparation method, a negative electrode slurry, a negative electrode plate, a secondary battery, a battery module, a battery pack and an electrical apparatus. The binder here comprises: an inner core material having a glass transition temperature of -50°C-0°C; and a shell layer material located on at least part of the surface of the inner core material and having a glass transition temperature of 60°C-100°C.

## Description

### TECHNICAL FIELD

The present application relates to the technical field of secondary batteries, and specifically relates to a binder, a binder composition, a preparation method, a negative electrode slurry, a negative electrode plate, a secondary battery, a battery module, a battery pack and an electrical apparatus.

### BACKGROUND

Secondary batteries are widely used in various consumer electronic products and electric vehicles due to their outstanding characteristics such as light weight, pollution free and no memory effect. With the continuous development of new energy industry, customers have higher demand for secondary batteries.

In the related art, binders such as styrene-butadiene rubber and sodium carboxymethyl cellulose are often used to prepare a negative electrode plate, which cannot take into account both the processability of the negative electrode plate and the kinetic performance of the battery cell corresponding to the negative electrode plate. Therefore, conventional binders for negative electrode plates need to be improved.

### SUMMARY OF THE INVENTION

In view of the technical problems existing in the background art, the present application provides a binder, a binder composition, a preparation method, a negative electrode slurry, a negative electrode plate, a secondary battery, a battery module, a battery pack and an electrical apparatus, aiming at satisfying both the processability of the negative electrode plate and the kinetic performance of the battery cell corresponding to the negative electrode plate.

In order to achieve the above object, a first aspect of the present application provides a binder, comprising:
an inner core material having a glass transition temperature of -50°C-0°C;
a shell layer material located on at least part of the surface of the inner core material and having a glass transition temperature of 60°C-100°C.

With respect to the prior art, the present application at least includes the following beneficial effects:
In the binder of the present application, the shell layer material is located on at least part of the surface of the inner core material, the inner core material is a soft material having a lower glass transition temperature, and the shell layer material is a hard material having a higher glass transition temperature, so the binder has a core-shell structure that is soft inside and hard outside; the soft inner core material facilitates the cold pressing of the negative electrode plate, helps to reduce the cold pressing pressure, increases the compaction density window of the negative electrode active substance, and provides a better bonding force, thereby being able to reduce the amount of the binder used, which reduces the coating on the surface of the negative electrode active substance; and the relatively hard shell layer material will not be excessively deformed after the negative electrode plate is cold pressed, which reduces the coating area of the binder on the negative electrode active substance, effectively reduces the impedance during lithium ion intercalation and deintercalation, and improves the kinetic performance of the battery cell corresponding to the negative electrode plate. Thus, when the above-mentioned binder is applied to a battery cell, the direct current internal resistance (DCR) of the battery cell is reduced by 5%-12%, and the charging window is slightly improved; and compared with styrene-butadiene rubber used in the conventional art, the bonding force of the binder in the present application is increased by more than 20% without film peeling and powder falling, and the fully charged interface is good.

In any embodiment of the present application, the shell layer material has a polar group.

In any embodiment of the present application, the inner core material comprises a copolymer of styrene monomer unit and butadiene monomer unit.

In any embodiment of the present application, the shell layer material comprises a copolymer of styrene monomer unit-butadiene monomer unit-unsaturated acid monomer unit-unsaturated ester monomer unit.

In any embodiment of the present application, the monomer corresponding to the unsaturated acid monomer unit comprises a substituted or unsubstituted unsaturated acid containing -C=C- and having 3-6 carbon atoms;
optionally, the monomer corresponding to the unsaturated acid monomer unit comprises one or more of acrylic acid, methacrylic acid, maleic acid, fumaric acid and itaconic acid.

In any embodiment of the present application, the monomer corresponding to the unsaturated ester monomer unit comprises a substituted or unsubstituted unsaturated ester containing -C=C-;
optionally, the monomer corresponding to the unsaturated ester monomer unit comprises one or more of methyl methacrylate, ethylhexyl ester, vinyl acetate, isooctyl acrylate, hydroxyethyl acrylate, isobornyl methacrylate, vinyl versatate, butyl acrylate, acrylonitrile, ethyl acrylate, n-butyl acrylate and isobutyl acrylate.

In any embodiment of the present application, the viscosity at 25°C of an aqueous solution of the binder at 45% solid content is 10 mPa·s-200 mPa·s.

In any embodiment of the present application, the volume average particle diameter Dv50 of the binder is 100 nm-1000 nm.

A second aspect of the present application provides a preparation method of a binder, comprising the following steps
S11, styrene monomer is polymerized with butadiene monomer to prepare the inner core material;
S12, styrene monomer, butadiene monomer, unsaturated acid monomer and unsaturated ester monomer are polymerized on the surface of the inner core material.

In any embodiment of the present application, in the polymerization reaction for preparing the inner core material, the mass ratio of the styrene monomer to the butadiene monomer is 10:(4-8).

In any embodiment of the present application, in the polymerization reaction for preparing the shell layer material, the mass ratio of the styrene monomer, the butadiene monomer, the unsaturated acid monomer to the unsaturated ester monomer is 10:(4-8):(1-3):(2-4).

A third aspect of the present application provides a binder composition comprising the binder of the first aspect of the present application or the binder prepared by the method of the second aspect of the present application and a highly viscous sodium carboxymethyl cellulose, and the viscosity of the aqueous solution of the highly viscous sodium carboxymethyl cellulose at 1% solid content is 10000 mPa·s-20000 mPa·s at 25°C.

In any embodiment of the present application, the mass ratio of the binder to the highly viscous sodium carboxymethyl cellulose is (1.1-3.5): 1.

In any embodiment of the present application, a hydrogen atom on a hydroxyl group in the highly viscous sodium carboxymethyl cellulose is substituted with a substituting agent, and the substituting agent reacts with the hydroxyl group to generate a hemiacetal;
optionally, the substituting agent comprises a dialdehyde monomer; and further optionally, the dialdehyde monomer comprises one or two of glyoxal and glutaraldehyde.

A fourth aspect of the present application provides a negative electrode slurry, comprising the binder of the first aspect of the present application, the binder prepared by the method of the second aspect of the present application or the binder composition of the third aspect of the present application.

A fifth aspect of the present application provides a preparation method of a negative electrode slurry, the negative electrode slurry comprising the binder composition, and the preparation method comprising the following steps:
S21, a negative electrode active substance agglomerate is prepared from a negative electrode active substance, a part of the highly viscous sodium carboxymethyl cellulose, a conductive agent and a part of a solvent;
S22, the remaining part of the highly viscous sodium carboxymethyl cellulose, the remaining part of the solvent and the binder are added to the negative electrode active substance agglomerate to prepare the negative electrode slurry.

In any embodiment of the present application, the method further comprises the step of preparing the highly viscous sodium carboxymethyl cellulose, comprising:
S201, a cotton fiber and an alkalizing agent are subjected to alkalization reaction in a mixed solution of ethanol and water;
5202, after the alkalization reaction is finished, an etherifying agent is added to the reaction system to cause etherification reaction;
S203, an etherification reaction product and the substituting agent are subjected to substitution reaction to prepare the highly viscous sodium carboxymethyl cellulose;
optionally, the substituting agent comprises a dialdehyde monomer; and further optionally, the dialdehyde monomer comprises one or two of glyoxal and glutaraldehyde.

In any embodiment of the present application, step S203 satisfies at least one of the following conditions I-III:
I, the mass ratio of the etherification reaction product to the substituting agent is 100:(0.2-1.0);
II, the temperature of the substitution reaction is 30-70°C;
III, the time of the substitution reaction is 20min-120min.

A sixth aspect of the present application provides a negative electrode plate, comprising:
a negative electrode current collector; and
a negative electrode active substance layer located on at least one surface of the negative electrode current collector;

Here, the negative electrode active substance layer comprises the binder of the first aspect of the present application, the binder prepared by the method of the second aspect of the present application or the binder composition of the third aspect of the present application.

In any embodiment of the present application, the mass proportion of the binder in the negative electrode active substance layer is 1.3%-2.1%, optionally 1.5%-2.1%, and further optionally 1.8%-2.1%.

In any embodiment of the present application, the negative electrode active substance layer comprises the binder composition of the third aspect of the present application, and the mass proportion of the highly viscous sodium carboxymethyl cellulose in the negative electrode active substance layer is 0.6%-1.2%, optionally 0.8%-1.2%, and further optionally 0.9%-1.2%.

A seventh aspect of the present application provides a secondary battery, comprising the negative electrode plate of the sixth aspect of the present application.

An eighth aspect of the present application provides a battery module, comprising the secondary battery of the seventh aspect of the present application.

A ninth aspect of the present application provides a battery pack, comprising the battery module of the eighth aspect of the present application.

A tenth aspect of the present application provides an electrical apparatus, comprising at least one of the secondary battery of the seventh aspect of the present application, the battery module of the eighth aspect of the present application or the battery pack of the ninth aspect of the present application.

### DESCRIPTION OF DRAWINGS

In order to illustrate the technical solutions of the present application more clearly, the drawings to be used in the present application will be briefly introduced below. Apparently, the drawings described below are merely some embodiments of the present application. For those of ordinary skills in the art, other drawings may also be obtained based on these drawings without making creative works.
Fig. 1 is a viscosity-time graph of a negative electrode slurry in Example 23 of the present application.
Fig. 2 is a bonding force-time graph of a negative electrode plate in Example 23 of the present application.
Fig. 3 is a DCR histogram of the discharge of the battery cells in Examples 24, 25, 26 and Comparative example 7 of the present application.
Fig. 4 is a schematic view of an embodiment of a secondary battery.
Fig. 5 is an exploded view of Fig. 4.
Fig. 6 is a schematic view of an embodiment of a battery module.
Fig. 7 is a schematic view of an embodiment of a battery pack.
Fig. 8 is an exploded view of Fig.7.
Fig. 9 is a schematic view of an embodiment of an apparatus in which a secondary battery is used as a power source.

### Description of reference numerals:

1, battery pack; 2, upper box body; 3, lower box body; 4, battery module; 5, secondary battery; 51, case; 52, electrode assembly; 53, cover plate; 6, electrical apparatus.

### DETAILED DESCRIPTION

The present application will be further described below in connection with specific embodiments. It should be understood that these specific embodiments are only used to illustrate the present application, and are not used to limit the scope of the present application.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. In addition, if the minimum range values 1 and 2 are listed, and if the maximum range values 3, 4 and 5 are listed, the following ranges are all contemplated: 1-3, 1-4, 1-5, 2-3, 2-4 and 2-5. In the present application, unless otherwise stated, a numerical range "a-b" represents an abbreviated representation of any combination of real numbers between a and b, wherein a and b are both real numbers. For example, a numerical range "0-5" indicates that all real numbers between "0-5" have been fully set forth herein, and "0-5" is merely an abbreviated representation of these numerical combinations. Additionally, when a parameter is expressed as an integer greater than or equal to 2, it is equivalent to disclosing that the parameter is, for example, an integer of 2, 3, 4, 5, 6, 7, 8, 9, 10, 11, 12, and the like.

In the description herein, it should be noted that, unless otherwise specified, "above" and "below" are inclusive of the number itself, and "more" in "one or more" means two or more.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further comprise step (c), meaning that step (c) may be added to the method in any order. For example, the method may comprise steps (a), (b) and (c), or may also comprise steps (a), (c) and (b), or may also comprise steps (c), (a) and (b), and the like.

Unless otherwise specifically stated, the "including" and "comprising" mentioned in the present application mean open-ended, or may be closed-ended. For example, the "including" and "comprising" may indicate that it is possible to include or comprise other components not listed, and it is also possible to include or comprise only the listed components.

In the description herein, unless otherwise stated, the term "or" is inclusive. That is, the phrase "A or B" means "A, B, or both A and B". More specifically, the condition "A or B" is satisfied by any of the following: A is true (or present) and B is false (or absent); A is false (or absent) and B is true (or present); or both A and B are true (or present). Unless otherwise stated, the terms used herein have the well-known meanings commonly understood by those skilled in the art. Unless otherwise specified, the numerical values of various parameters mentioned in the present application can be measured by various measurement methods commonly used in the art (for example, test can be carried out according to the methods given in the Examples of the present application).

In the related art, binders such as styrene-butadiene rubber and sodium carboxymethyl cellulose are often used to prepare a negative electrode plate, which cannot take into account both the processability of the negative electrode plate and the kinetic performance of the battery cell. A person skilled in the present application has found that this is mainly because the negative electrode plate is prepared using the binder styrene-butadiene rubber with a conventional usage percentage of 2%-2.5% and the sodium hydroxymethyl cellulose with a conventional usage percentage of 1%-2% in the negative electrode active substance layer, and the battery cell corresponding to the negative electrode plate has poor kinetic performance under a high power system; if the amount of styrene-butadiene rubber and sodium hydroxymethyl cellulose added is reduced in order to improve the kinetic performance of the battery cell, a series of processability problems will occur, such as the stick-off and sedimentation of negative electrode slurry, poor filterability, scratching of coated particles and poor bonding force of negative electrode plate, thus further deteriorating the kinetic performance of the battery cell.

The binder provided in the present application comprises: an inner core material having a glass transition temperature of -50°C-0°C; and a shell layer material located on at least part of the surface of the inner core material and having a glass transition temperature of 60°C-100°C.

Without wishing to be limited to any theory, in the binder of the present application, the shell layer material is located on at least part of the surface of the inner core material, the inner core material is a soft material having a lower glass transition temperature, and the shell layer material is a hard material having a higher glass transition temperature, so the binder has a core-shell structure that is soft inside and hard outside; the soft inner core material facilitates the cold pressing of the negative electrode plate, helps to reduce the cold pressing pressure, increases the maximum value of the compaction density window of the negative electrode active substance, and provides a better bonding force, thereby being able to reduce the amount of the binder used, which reduces the coating on the surface of the negative electrode active substance; and the relatively hard shell layer material will not be excessively deformed after the negative electrode plate is cold pressed, which reduces the coating area of the binder on the negative electrode active substance, effectively reduces the impedance during lithium ion intercalation and deintercalation, and improves the kinetic performance of the battery cell corresponding to the negative electrode plate. Thus, when the above-mentioned binder is applied to a battery cell, the direct current internal resistance (DCR) of the battery cell is reduced by 5%-12%, and the charging window is slightly improved; and compared with styrene-butadiene rubber used in the conventional art, the bonding force of the binder in the present application is increased by more than 20% without film peeling and powder falling, and the fully charged interface is good.

It can be understood that the shell layer material can be coated on the whole surface of the inner core material, or it can be only coated on part of the surface of the inner core material, and preferably the shell layer material is coated on the whole surface of the inner core material. Polar groups may include one or more of carboxyl, hydroxyl, carbonyl and ester group.

The glass transition temperatures of the above-mentioned inner core material and shell layer material can be measured by a differential scanning calorimeter (DSC), and the specific method is as follows: 1, sample preparation: weighing 1-3 mg of sample in an Al crucible and covering the crucible; 2, parameter settings: nitrogen atmosphere, purge gas 50Ml/min, and protective gas 100Ml/min; 3, temperature rise procedure: 10°C/min, 35°C∼-30°C, maintaining at -30°C for 3min; 10°C/min, -30°C~50°C; 4, reading the temperature in the DSC curve at which the slope is maximal as the glass transition temperature.

In Examples of the present application, the glass transition temperature of the inner core material is -50°C-0°C; for example, it can be -50°C~-5°C, -50°C~-10°C, -50°C~-20°C, - 50°C~-30°C, -50°C~-40°C, -30°C~-0°C or -30°C~-10°C, etc. The glass transition temperature of the shell layer material is 60°C-100°C; for example, it can be 60°C-95°C, 65°C-90°C, 70°C-85°C or 70°C-80°C, etc.

Through in-depth research, the inventors have found that, on the basis of satisfying the above-mentioned design conditions, if the binder of the present application further satisfies one or more of the following conditions, the kinetic performance of the battery cell can be further improved.

In some of the Examples, the shell layer material has a polar group. The polar group can adjust the swelling capacity of the binder in the electrolyte solution, so that the binder has higher swelling characteristics in the electrolyte solution, the transport channel of lithium ions is improved, and the kinetic performance of the battery cell is further improved; the polar group of the shell layer material can provide hydrogen bonding, further enhance the bonding force of the binder to the negative electrode active substance, and improve the processability of the negative electrode plate.

In some of the Examples, the inner core material may comprise a copolymer of styrene monomer unit-butadiene monomer unit.

In some of the Examples, the shell layer material may comprise a copolymer of styrene monomer unit-butadiene monomer unit-unsaturated acid monomer unit-unsaturated ester monomer unit.

It can be understood that the copolymer of styrene monomer unit-butadiene monomer unit-unsaturated acid monomer unit-unsaturated ester monomer unit means a copolymer composed together of styrene monomer unit, butadiene monomer unit, unsaturated acid monomer unit and unsaturated ester monomer unit, the copolymer comprises styrene monomer unit, butadiene monomer unit, unsaturated acid monomer unit and unsaturated ester monomer unit, the order in which the styrene monomer unit, butadiene monomer unit, unsaturated acid monomer unit and unsaturated ester monomer unit are arranged in the copolymer is not limited, and the styrene monomer unit, butadiene monomer unit, unsaturated acid monomer unit and unsaturated ester monomer unit may be arranged in any order in the copolymer.

Optionally, the monomer corresponding to the unsaturated acid monomer unit comprises a substituted or unsubstituted unsaturated acid containing -C=C- and having 3-6 carbon atoms. "Substituted or unsubstituted" means that the unsaturated acid may or may not be substituted. When the defined unsaturated acid is substituted, it should be understood that it is optionally substituted with an acceptable group in the art, including but not limited to: silyl, carbonyl, alkoxycarbonyl, aryloxycarbonyl, carbamoyl, haloformyl, formyl, cyano, isocyano, isocyanate group, thiocyanate group, isothiocyanate group, hydroxyl, trifluoromethyl, nitro or halo, and the above-mentioned groups can also be further substituted with an acceptable substituent in the art. Further optionally, the monomer corresponding to the unsaturated acid monomer unit comprises one or more of acrylic acid, methacrylic acid, maleic acid, fumaric acid and itaconic acid.

Optionally, the monomer corresponding to the unsaturated ester monomer unit comprises a substituted or unsubstituted unsaturated ester containing -C=C-. "Substituted or unsubstituted" means that the unsaturated acid may or may not be substituted. When the defined unsaturated acid is substituted, it should be understood that it is optionally substituted with an acceptable group in the art, including but not limited to: silyl, carbonyl, alkoxycarbonyl, aryloxycarbonyl, carbamoyl, haloformyl, formyl, cyano, isocyano, isocyanate group, thiocyanate group, isothiocyanate group, hydroxyl, trifluoromethyl, nitro or halo, and the above-mentioned groups can also be further substituted with an acceptable substituent in the art. Further optionally, the monomer corresponding to the unsaturated ester monomer unit comprises one or more of methyl methacrylate, ethylhexyl ester, vinyl acetate, isooctyl acrylate, hydroxyethyl acrylate, isobornyl methacrylate, vinyl versatate, butyl acrylate, acrylonitrile, ethyl acrylate, n-butyl acrylate and isobutyl acrylate.

In some of the Examples, the viscosity at 25°C of an aqueous solution of the binder at 45% solid content is 10 mPa s-200 mPa·s; for example, it can be 10 mPa·s-150 mPa·s, 20 mPa·s-150 mPa·s, 50 mPa·s-100 mPa·s or 80 mPa·s-100 mPa·s, etc.

The above-mentioned viscosity at 25°C of the aqueous solution of the binder at 45% solid content can be measured by the following method: weighing 500g of the aqueous solution of the binder at 45% solid content to be tested, stirring for 2h to completely stabilize and homogenize the binder to be tested, and then carrying out the determination. Detection temperature: 25±1°C; rotor used and rotating speed: 63# rotor, 12 r/min, taking the 6th minute value; equipment model: DV-2TLV Brookfield viscometer. In some of the embodiments, the volume average particle diameter Dv50 of the binder is 100 nm-1000 nm; for example, it can be 100nm-900nm, 200nm-900nm, 300nm-600nm, 400nm-600nm or 500nm-600nm, etc.

The above-mentioned volume average particle diameter Dv50 refers to the particle size corresponding to 50% in the cumulative volume distribution. As an example, Dv50 can be measured conveniently with reference to GB/T 19077-2016 particle size distribution laser diffraction method, using a laser particle size analyzer, such as a Mastersizer Model 2000E laser particle size analyzer from Malvern Instruments Co. Ltd, UK.

An embodiment of the present application further provides a preparation method of the above-mentioned binder, comprising the following steps:
S11, styrene monomer is polymerized with butadiene monomer to prepare the inner core material;
S12, styrene monomer, butadiene monomer, unsaturated acid monomer and unsaturated ester monomer are polymerized on the surface of the inner core material.

In some of the Examples, in the polymerization reaction for preparing the inner core material, the mass ratio of the styrene monomer to the butadiene monomer is 10:(4-8); for example, it can be 10: (4-7), 10: (5-8) or 10: (5-6), etc.

In some of the Examples, in the polymerization reaction for preparing the shell layer material, the mass ratio of the styrene monomer, the butadiene monomer, the unsaturated acid monomer to the unsaturated ester monomer is 10:(4-8):(1-3):(2-4); for example, it can be 10: (4-7):(2-3):(2-3) or 10: (5-8):(1-2):(2-3), etc.

In the Examples of the present application, an emulsifier and an initiator are required to participate both in the polymerization reaction for preparing the inner core material and in the polymerization reaction for preparing the shell layer material.

Optionally, the emulsifier may comprise one or more of sodium alkyl sulfate, sodium alkyl sulfonate, sodium alkyl diphenyl ether disulfonate, ammonium alkyl phenol ether sulfate, sodium alkyl phenol ether sulfosuccinate, sodium p-styrene sulfonate, sodium 2-acrylamide-2,2-dimethylethanesulfonate, sodium allyl alkyl succinate sulfonate, sodium acrylamidoisopropyl sulfonate and sodium alkyl acrylic acid-2-ethanesulfonate.

Optionally, the initiator may comprise one or more of sodium persulfate, ammonium persulfate and potassium persulfate.

An embodiment of the present application further provides a binder composition, comprising the above-mentioned binder or the binder prepared by the above-mentioned method and the highly viscous sodium carboxymethyl cellulose, and the viscosity at 25°C of the aqueous solution of the highly viscous sodium carboxymethyl cellulose at 1% solid content is 10000 mPa·s-20000 mPa·s; for example, it can be 10000 mPa·s-19000 mPa·s, 10000 mPa·s-15000 mPa·s, 13000 mPa·s-17000 mPa·s or 15000 mPa·s-20000 mPa·s, etc.

In the conventional art, the viscosity at 25°C of the aqueous solution of sodium carboxymethyl cellulose at 1% solid content used for the negative electrode plate is 2000 mPa·s-8000 mPa·s, while the viscosity at 25°C of the aqueous solution of the above-mentioned highly viscous sodium carboxymethyl cellulose at 1% solid content is greatly increased; with the use of the highly viscous sodium carboxymethyl cellulose, on the premise of ensuring the processability of the negative electrode plate, the usage amount can be appropriately reduced to reduce the coating on the surface of the negative electrode active substance, reduce the migration impedance of lithium ions, and improve the kinetic performance of the battery cell corresponding to the negative electrode plate.

The viscosity at 25°C of the aqueous solution of the above-mentioned highly viscous sodium carboxymethyl cellulose at 1% solid content can be measured by the following method: the highly viscous sodium carboxymethyl cellulose to be measured with a dry weight of 5.0g are weighed, and pure water is added until the total weight of the highly viscous sodium carboxymethyl cellulose to be measured and the pure water is 500g, which is stirred and dissolved for 2h to completely disperse the highly viscous sodium carboxymethyl cellulose to be measured uniformly, and then measured, wherein different viscosities correspond to different rotors. Detection temperature: 25±1°C; rotor used and rotating speed: 63# rotor, 12 r/min, taking the 6th minute value; equipment model: DV-2TLV Brookfield viscometer.

In some of the Examples, the mass ratio of the binder to the highly viscous sodium carboxymethyl cellulose is (1.1-3.5):1; for example, it can be (1.1-3):1, (1.6-2.6):1, (1.8-2.2):1 or (2-2.2), etc. The skilled person has found that when the mass ratio of the binder to the highly viscous sodium carboxymethyl cellulose is within this range, it is in favor of further enhancing the bonding force of the binder composition.

In some of the Examples, a hydrogen atom on a hydroxyl group in the highly viscous sodium carboxymethyl cellulose is substituted with a substituting agent, and the substituting agent reacts with the hydroxyl group to generate a hemiacetal. By replacing the hydrogen atom on the hydroxyl group in the highly viscous sodium carboxymethyl cellulose with the substituting agent, the highly viscous sodium carboxymethyl cellulose temporarily loses its hydrophilicity, thus avoiding the clustering phenomenon of the highly viscous sodium carboxymethyl cellulose immediately when it comes into contact with water, and being in favor of realizing the rapid dispersion of the highly viscous sodium carboxymethyl cellulose in water. At the same time, the hemiacetal is able to undergo hydrolysis during dissolution in water, regenerating the hydroxyl group and restoring hydrophilicity.

Optionally, the substituting agent may comprise a dialdehyde monomer; and further optionally, the dialdehyde monomer may comprise one or two of glyoxal and glutaraldehyde.

An Example of the present application further provides a preparation method of a highly viscous sodium carboxymethyl cellulose, comprising the following steps:
S201, a cotton fiber and an alkalizing agent are subjected to alkalization reaction in a mixed solution of ethanol and water.

In some of the Examples, the mass ratio of water to the cotton fiber is (0.3-0.8): 1, for example, it can be (0.3-0.7): 1, (0.4-0.6): 1 or (0.5-0.7): 1, etc. The mass ratio of ethanol to the cotton fiber is (1.0-2.0):1, for example, it can be (1.0-1.8):1, (1.1-1.7):1, (1.3-1.6):1 or (1.4-1.5):1, etc. The alkalizing agent can be an aqueous sodium hydroxide solution having a mass percentage concentration of 30%-55%; and the mass ratio of the alkalizing agent to the cotton fiber is (0.6-1.0):1, for example, it can be (0.6-0.9):1, (0.7-1.0):1 or (0.7-0.8):1, etc. The time of alkalization reaction can be 30min-80min, and the temperature of alkalization reaction can be 10°C-40°C.

S202, after the alkalization reaction is finished, an etherifying agent is added to the reaction system to cause etherification reaction;

In some of the Examples, the etherifying agent can be an ethanol solution of chloroacetic acid with a mass percentage concentration of 50%-80%. The mass ratio of the etherifying agent to the cotton fiber is (1.0-1.5):1, for example, it can be (1.0-1.4):1 or (1.2-1.3):1, etc. The time of etherification reaction can be 40min-70min, and the temperature of etherification reaction can be 60°C-90°C.

S203, an etherification reaction product and the substituting agent are subjected to substitution reaction to prepare the highly viscous carboxymethyl cellulose;
optionally, the substituting agent comprises a dialdehyde monomer; and further optionally, the dialdehyde monomer comprises one or two of glyoxal and glutaraldehyde.

In some of the Examples, the mass ratio of the product of etherification reaction to the substituting agent is 100:(0.2-1.0); for example, it can be 100:(0.2-0.8), 100:(0.3-0.7) or 100:(0.4-0.6), etc.

In some of the Examples, the temperature of substitution reaction is 30°C-70°C; for example, it can be 30°C-60°C, 40°C-70°C or 50°C-60°C, etc.

In some of the Examples, the time of substitution reaction is 20min-120min; for example, it can be 20min-110min, 30min-90min, 40min-70min or 50min-60min, etc.

An Example of the present application further provides a negative electrode slurry, comprising the above-mentioned binder, the binder prepared by the above-mentioned method or the above-mentioned binder composition.

An Example of the present application further provides a preparation method of a negative electrode slurry comprising a binder composition, wherein the preparation method comprises the following steps:
S21, a negative electrode active substance agglomerate is prepared from a negative electrode active substance, a part of the highly viscous sodium carboxymethyl cellulose, a conductive agent and a part of a solvent;
S22, the remaining part of the highly viscous sodium carboxymethyl cellulose, the remaining part of the solvent and the binder are added to the negative electrode active substance agglomerate to prepare the negative electrode slurry.

When preparing the negative electrode slurry in the Examples of the present application, the highly viscous sodium carboxymethyl cellulose is added in two portions. Firstly, a part of the highly viscous sodium carboxymethyl cellulose is added to infiltrate the negative electrode active substance, so as to promote the uniform dispersion of the negative electrode active substance in the water-based slurry, and then stirring and kneading is performed to obtain a negative electrode active substance agglomerate, and finally the remaining part of the highly viscous sodium carboxymethyl cellulose is added to stir the negative electrode active substance, wherein the highly viscous sodium carboxymethyl cellulose can suspend and disperse the negative electrode active substance. It can be understood that, due to the rapid dispersion of the highly viscous sodium carboxymethyl cellulose in water, as compared with the sodium carboxymethyl cellulose used in the conventional negative electrode slurry, the stirring time can be reduced to meet the 2h negative electrode stirring-slurrying process, and the stirring productivity can be increased.

In some of the Examples, the highly viscous sodium carboxymethyl cellulose is added in two portions, and the mass ratio of the first portion of the highly viscous sodium carboxymethyl cellulose added to the second portion of the highly viscous sodium carboxymethyl cellulose added is (0.25-1): 1; for example, it can be (0.25-0.9): 1, (0.3-0.8): 1 or (0.5-0.7): 1, etc.

### Negative electrode plate

An Example of the present application further provides a negative electrode plate, comprising:
a negative electrode current collector; and
a negative electrode active substance layer located on at least one surface of the negative electrode current collector;
wherein the negative electrode active substance layer comprises the above-mentioned binder, the negative electrode binder prepared by the above-mentioned method or the above-mentioned binder composition.

In some of the Examples, the mass proportion of the binder in the negative electrode active substance layer is 1.3%-2.1%, optionally 1.5%-2.1%, and further optionally 1.8%-2.1%. The usage amount of the binder in the negative electrode active substance layer is significantly lower than the usage amount of binder styrene-butadiene rubber in the conventional art.

The mass proportion of the above-mentioned binder in the negative electrode active substance layer can be measured by the following method: firstly, the mass M1 of the binder in the negative electrode active substance layer is measured, then the mass M0 of the negative electrode active substance layer is measured, and the mass proportion of the binder in the negative electrode active substance layer is calculated based on the formula M1/M0*100%.

In some of the Examples, the negative electrode active substance layer comprises the above-mentioned binder composition, and the mass proportion of the highly viscous sodium carboxymethyl cellulose in the negative electrode active substance layer is 0.6%-1.2%, optionally 0.8%-1.2%, and further optionally 0.9%-1.2%. In the conventional art, the mass proportion of sodium carboxymethyl cellulose used in the negative electrode active substance layer is usually 1%-2%, while in the Examples of the present application, the mass proportion of the highly viscous sodium carboxymethyl cellulose in the negative electrode active substance layer is significantly reduced.

The mass proportion of the above-mentioned highly viscous sodium carboxymethyl cellulose in the negative electrode active substance layer can be measured by the following method: firstly, the mass M2 of the highly viscous sodium carboxymethyl cellulose in the negative electrode active substance layer is measured, then the mass M0 of the negative electrode active substance layer is measured, and the mass proportion of the highly viscous sodium carboxymethyl cellulose in the negative electrode active substance layer is calculated based on the formula M2/M0*100%.

The negative electrode current collector can be a conventional metal foil or a composite current collector. As an example, a copper foil can be used as the metal foil. The composite current collector may comprise a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

The negative electrode active substance layer usually further comprises a negative electrode active substance, a conductive agent and other optional auxiliaries.

As an example, the negative electrode active substance may comprise at least one of the following materials: artificial graphite, natural graphite, soft carbon, hard carbon, silicon-based material, tin-based material, lithium titanate, and the like. The silicon-based material can be selected from at least one of elemental silicon, silicon-oxygen compound, silicon-carbon composite, silicon-nitrogen composite and silicon alloy. The tin-based material can be selected from at least one of elemental tin, tin-oxygen compound and tin alloy. However, the present application is not limited to these materials, and other conventional materials useful as negative electrode active materials for batteries can also be used. These negative electrode active materials may be used alone or in combination of two or more.

As an example, the conductive agent can be one or more of superconducting carbon, acetylene black, carbon black, Ketjen black, carbon dot, carbon nanotube, graphene and carbon nanofiber.

As an example, the other optional auxiliary can be a PTC thermistor material and the like.

As an example, the negative electrode plate can be prepared by dispersing the above-mentioned components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

The above-mentioned starting materials that are not particularly specified are all commercially available.

### Secondary battery

A secondary battery refers to a battery that can be used continually by activating the active material through charging after the battery is discharged.

Generally, the secondary battery comprises a positive electrode sheet, the negative electrode plate provided above in the present application, a separator and an electrolyte solution. During the charging and discharging process of the battery, active ions are intercalated and deintercalated back and forth between the positive electrode sheet and the negative electrode plate. The separator is provided between the positive electrode sheet and the negative electrode plate and functions to separate. The electrolyte solution serves to conduct ions between the positive electrode sheet and the negative electrode plate.

### Positive electrode sheet

In the secondary battery, the positive electrode sheet typically comprises a positive electrode current collector and a positive electrode film layer provided on at least one surface of the positive electrode current collector, wherein the positive electrode film layer comprises a positive electrode active material.

As an example, the positive electrode current collector has two opposite surfaces in its own thickness direction, and the positive electrode film layer is provided on either or both of the two opposite surfaces of the positive electrode current collector.

As an example, the positive electrode current collector may be a metal foil or a composite current collector. For example, an aluminum foil can be used as the metal foil. The composite current collector may comprise a high molecular material substrate layer and a metal layer formed on at least one surface of the high molecular material substrate layer. The composite current collector can be formed by forming a metal material (aluminium, aluminium alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

When the secondary battery is a lithium-ion battery, the positive electrode active material may be a positive electrode active material well known in the art for lithium-ion batteries. As an example, the positive electrode active material may comprise at least one of the following materials: lithium-containing phosphate with olivine structure, lithium transition metal oxide, and their respective modified compounds. However, the present application is not limited to these materials, and other conventional materials useful as positive electrode active materials for batteries can also be used. These positive electrode active materials may be used alone or in combination of two or more. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their modified compounds. Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

When the secondary battery is a sodium-ion battery, the positive electrode active material may be a positive electrode active material well known in the art for sodium-ion batteries. As an example, the positive electrode active materials may be used alone or in combination of two or more. Here, the positive electrode active substance may be selected from sodium-iron composite oxide (NaFeO₂), sodium-cobalt composite oxide (NaCoO₂), sodium-chromium composite oxide (NaCrO₂), sodium-manganese composite oxide (NaMnO₂), sodium-nickel composite oxide (NaNiO₂), sodium-nickel-titanium composite oxide (NaNi_{1/2}Ti_{1/2}O₂), sodium-nickel-manganese composite oxide (NaNi_{1/2}Mn_{1/2}O₂), sodium-iron-manganese composite oxide (Na_{2/3}Fe_{1/3}Mn_{2/3}O₂), sodium-nickel-cobalt-manganese composite oxide (NaNi_{1/3}Co_{1/3}Mn_{1/3}O₂), sodium-iron phosphate compound (NaFePO₄), sodium-manganese phosphate compound (NaMn_{P}O₄), sodium-cobalt phosphate compound (NaCoPO₄), prussian blue-based material, polyanionic material (phosphate, fluorophosphate, pyrophosphate, sulfate), etc. However, the present application is not limited to these materials, and other conventionally known materials useful as positive electrode active substances of sodium-ion batteries can also be used in the present application.

The positive electrode film layer further optionally comprises a binder, a conductive agent and other optional auxiliaries.

As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylate resin.

As an example, the conductive agent may comprise at least one of superconducting carbon, acetylene black, carbon black, Ketjen black, carbon dot, carbon nanotube, graphene and carbon nanofiber.

As an example, the positive electrode sheet can be prepared by dispersing the above-mentioned components for preparing the positive electrode sheet, for example, the positive electrode active material, the conductive agent, the binder and any other components in a solvent (for example, N-methyl pyrrolidone) to form a positive electrode slurry; and coating the positive electrode slurry on a positive electrode current collector, followed by oven drying, cold pressing and other procedures, to obtain the positive electrode sheet.

### Separator

In some embodiments, the secondary battery further comprises a separator. The type of the separator is not particularly limited in the present application, and any well-known separator with a porous structure having good chemical stability and mechanical stability may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode sheet, the negative electrode plate, and the separator can be made into an electrode assembly by a winding process or a lamination process.

### Electrolyte solution

The secondary battery may comprise an electrolyte solution, which serves to conduct ions between the positive electrode and the negative electrode. The electrolyte solution may comprise an electrolyte salt and a solvent.

As an example, the electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP) and lithium tetrafluoro(oxalato)phosphate (LiTFOP).

As an example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS) and ethyl sulfonyl ethane (ESE).

In some embodiments, the electrolyte solution further comprises an additive. For example, the additive may comprise a negative electrode film-forming additive, or may comprise a positive electrode film-forming additive, and may further comprise an additive capable of improving certain performances of the battery, such as an additive for improving the overcharging performance of the battery, an additive for improving the high temperature performance of the battery, and an additive for improving the low temperature performance of the battery, etc.

In some embodiments, the secondary battery of the present application is a lithium-ion secondary battery.

The secondary battery can be prepared according to a conventional method in the art, for example, the positive electrode sheet, the separator and the negative electrode plate are wound (or laminated) in sequence, so that the separator is located between the positive electrode sheet and the negative electrode plate and functions to separate to obtain a battery cell, and the battery cell is placed in an outer package, injected with the electrolyte solution and sealed to obtain the secondary battery.

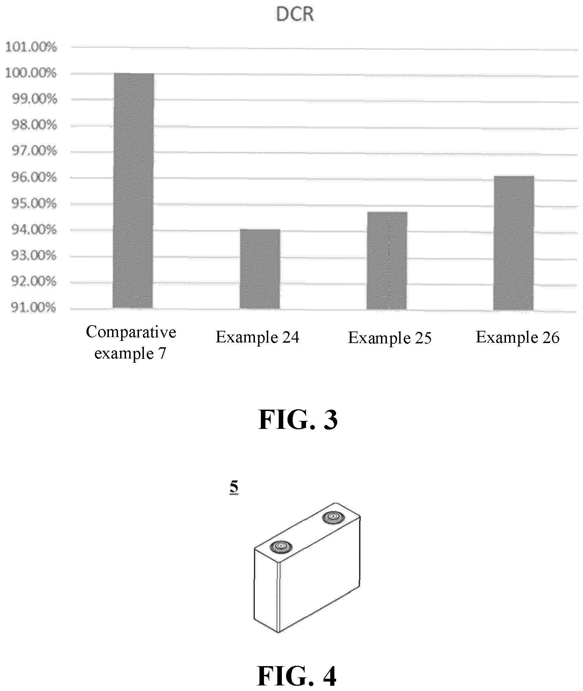

The Examples of the present application have no particular limitation on the shape of the secondary battery, which can be cylindrical, square or any other shapes. Fig. 4 is an example of secondary battery 5 having a square structure.

In some Examples, the secondary battery may comprise an outer package. The outer package can be used to encapsulate the above-mentioned electrode assembly and electrolyte solution.

In some Examples, the outer package of the secondary battery may be a hard shell, e.g., a hard plastic shell, an aluminum shell, and a steel shell, etc. The outer package of the secondary battery may also be a soft pack, such as a bag-type soft pack. The material of the soft package can be a plastic, and as plastics, polypropylene, polybutylene terephthalate, and polybutylene succinate can be cited.

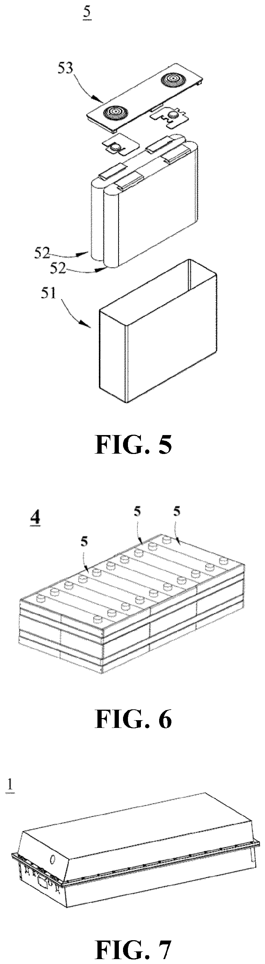

In some Examples, referring to Fig. 5, the outer package may comprise a case 51 and a cover plate 53. Here, the case 51 may comprise a bottom plate and a side plate connected to the bottom plate, with the bottom plate and the side plate enclosing to form an accommodating cavity. The case 51 has an opening that communicates with the accommodating cavity, and the cover plate 53 can cover the opening to close the accommodating cavity.

The positive electrode sheet, the negative electrode plate, and the separator may be formed into an electrode assembly 52 by a winding process or a lamination process. The electrode assembly 52 is encapsulated within the accommodating cavity. The electrolyte solution impregnates the electrode assembly 52. The number of electrode assemblies 52 contained in the secondary battery 5 may be one or more, and can be adjusted according to requirements.

In some Examples, the secondary battery can be assembled into a battery module, the number of secondary batteries contained in the battery module may be multiple, and the specific number can be adjusted according to the application and capacity of the battery module.

Fig. 6 is an example of battery module 4. In the battery module 4, multiple secondary batteries 5 may be sequentially arranged along a length direction of the battery module 4. Of course, they may be arranged in any other way. The plurality of secondary batteries 5 may further be fixed by fasteners.

Optionally, the battery module 4 may further comprise a housing having an accommodating space, in which the plurality of secondary batteries 5 are accommodated.

In some Examples, the above-mentioned battery modules can further be assembled into a battery pack, and the number of battery modules contained in the battery pack can be adjusted according to the application and capacity of the battery pack.

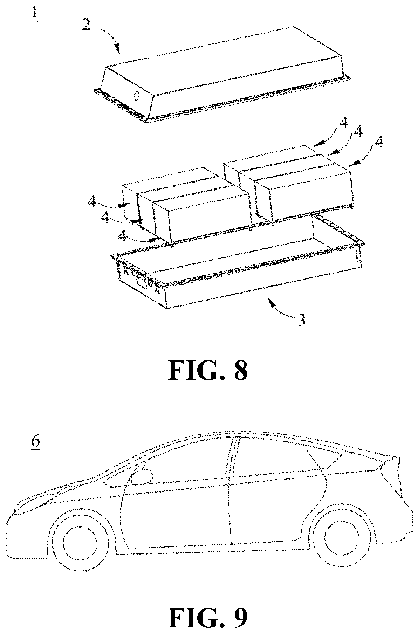

Figs. 7 and 8 are an example of battery pack 1. The battery pack 1 may comprise a battery box and a plurality of battery modules 4 provided in the battery box. The battery box comprises an upper box body 2 and a lower box body 3, the upper box body 2 can cover the lower box body 3 to form a closed space for accommodating the battery modules 4. The plurality of battery modules 4 may be arranged in the battery box in any manner.

### Electrical apparatus

The present application further provides an electrical apparatus, comprising at least one of the secondary battery, the battery module or the battery pack. The secondary battery, the battery module, or the battery pack may be used as a power source for the apparatus, or may be used as an energy storage unit of the apparatus. The apparatus may be, but is not limited to, a mobile device (e.g., a mobile phone and a laptop), an electric vehicle (e.g., an all-electric vehicle, a hybrid electric vehicle, a plug-in hybrid electric vehicle, an electric bicycle, an electric scooter, an electric golf cart, and an electric truck), an electric train, a ship and a satellite, an energy storage system, and the like.

For the apparatus, the secondary battery, the battery module or the battery pack can be selected according to the use requirements of the apparatus.

Fig. 9 is an example of electrical apparatus 6. The electrical apparatus 6 is an all-electric vehicle, a hybrid electric vehicle, or a plug-in hybrid electric vehicle, etc. In order to meet the requirements of the apparatus for high power and high energy density of the secondary battery, a battery pack or a battery module can be employed.

As another example, the apparatus may be a mobile phone, a tablet, a laptop, etc. The apparatus is generally required to be light and thin, and may use a secondary battery as a power source.

The beneficial effects of the present application are further illustrated below in conjunction with Examples.

### Examples

In order to make the technical problems to be solved by the present application, the technical solutions and the beneficial effects clearer, the following detailed description will be made in conjunction with Examples and drawings. It is clear that the Examples described are only a part of the Examples of the present application rather than all of them. The following description of at least one exemplary Example is in fact illustrative only, and is in no way taken as any limitation on the present application and its uses. Based on the Examples in the present application, all other Examples obtained by those of ordinary skill in the art without creative efforts will fall within the protection scope of the present application.

All the materials used in the Examples of the present application are commercially available.

### I, Preparation of the binder

### Example 1:

The binder comprises an inner core material and a shell layer material coated on the surface of the inner core material. The glass transition temperature of the inner core material was -30°C, the glass transition temperature of the shell layer material was 80°C, the viscosity at 25°C of the aqueous solution of the binder at 1% solid content was 100 mPa·s, and the volume average particle diameter Dv50 of the binder was 500 nm. Specifically, the preparation method was as follows:
1) 110g of water, 0.65g of initiator and 1.5g of emulsifier were added to a reaction kettle, and then 50g of styrene and 25g of butadiene were added, the pH was adjusted to 5, and the temperature of the reaction kettle was raised to 70°C to react for 40min to obtain a core layer emulsion containing an inner core material;
2) 50g of styrene, 25g of butadiene, 10g of methacrylic acid and 15g of methyl methacrylate were added dropwise to the reaction kettle, 1.5g of emulsifier, 0.65g of initiator and 110g of deionized water were added dropwise, and after fully stirring for 1.5h, the temperature of the reaction kettle was raised to 80°C, the reaction was stirred for 6h, and then the material was cooled and collected to obtain an emulsion containing the binder.

### Examples 2-14:

Examples 2-14 were essentially the same as Example 1, except that: at least one of the parameters of the type and/or amount of the monomer used in the preparation of the inner core material, the type and/or amount of the monomer used in the preparation of the shell layer material, the glass transition temperature of the inner core material, the glass transition temperature of the shell layer material, the viscosity at 25°C of the aqueous solution of the binder at 1% solid content, and the volume average particle diameter Dv50 of the binder was different, specifically as shown in Table 1 below.

Here, in Examples 2-3, the pH value, temperature and reaction time in the reaction kettle in step 1) and/or the temperature in the reaction kettle in step 2) were further adjusted.

Specifically, in step 1) in Example 2, the pH value in the reaction kettle was 4.5, the temperature in the reaction kettle was 60°C, and the reaction time was 50min; and in step 2), the temperature in the reaction kettle was 85°C.

Specifically, in step 1) in Example 3, the pH value in the reaction kettle was 5.5, the temperature in the reaction kettle was 80°C, and the reaction time was 30min; and in step 2), the temperature in the reaction kettle was 83°C.

### Comparative example 1

In Comparative example 1, only the inner core material was prepared, and the binder of Comparative example 1 was obtained according to the same preparation method as step 1) in Example 1.

### Comparative example 2

In Comparative example 2, the shell layer material was prepared directly, and the binder of Comparative example 2 was obtained according to the same preparation method as step 2) in Example 1.

### Comparative examples 3-4

Comparative examples 3-4 were essentially the same as Example 1, except that: the amount of monomer used in the preparation of the shell layer material is different, specifically as shown in Table 1 below.

### Testing of binder performance

The solid contents of the binder-containing emulsions in Examples 1-14 and Comparative examples 1-4 were calculated, the specific method was as follows: calculating the total mass W1 of all the materials added during preparation except deionized water, calculating the total mass W2 of all the materials added during preparation including deionized water, and calculating the solid content of the binder contained in the emulsion according to the formula W1/W2* 100%.

The binders of Examples 1-14 and Comparative examples 1-4 were tested for the glass transition temperature of the inner core material, the glass transition temperature of the shell layer material, the viscosity at 25°C of the aqueous solution of the binder at 1% solid content and the volume average particle diameter Dv50, which was the corresponding particle diameter when the cumulative volume distribution percentage of the binder reached 50%. The test method was respectively as follows:
Glass transition temperature of the inner core material: the glass transition temperature of the inner core material was measured using a differential scanning calorimeter (DSC), and the specific process was as follows: 1, sample preparation: weighing 1-3mg of the inner core material in an Al crucible and covering the crucible; 2, parameter settings: nitrogen atmosphere, purge gas 50Ml/min, and protective gas 100Ml/min; 3, temperature rise procedure: 10°C/min, 35°C∼-30°C, maintaining at -30°C for 3min; 10°C/min, -30°C~50°C; 4, reading the temperature in the DSC curve at which the slope is maximal as the glass transition temperature of the inner core material.
Glass transition temperature of the shell layer material: the glass transition temperature of the inner core material was measured using a differential scanning calorimeter (DSC), and the specific process was as follows: 1, sample preparation: weighing 1-3mg of the inner core material in an Al crucible and covering the crucible; 2, parameter settings: nitrogen atmosphere, purge gas 50Ml/min, and protective gas 100Ml/min; 3, temperature rise procedure: 10°C/min, 35°C∼-30°C, maintaining at -30°C for 3min; 10°C/min, -30°C~50°C; 4, reading the temperature in the DSC curve at which the slope is maximal as the glass transition temperature of the shell layer material.
Viscosity of emulsion containing the binder at 25°C: weighing 500g of the emulsion of the binder to be tested, stirring and dissolving for 2h to completely stabilize and homogenize the binder to be tested, and then carrying out the determination. Detection temperature: 25±1°C; rotor used and rotating speed: 63# rotor, 12 r/min, taking the 6th minute value; equipment model: DV-2TLV Brookfield viscometer.
Volume average particle diameter Dv50: according to GB/T 19077-2016 particle size distribution laser diffraction method, using a laser particle size analyzer (such as model Mastersizer 2000E laser particle size analyzer) to make determination.

Some parameters of the binders prepared in Examples 1-14 and Comparative examples 1-4 as well as the types and amounts of monomers used in the preparation of the inner core materials and the types and amounts of monomers used in the preparation of the shell layer materials are shown in Table 1 below.

**Table 1**

| Groups | Monomers and their amounts used in the preparation of the inner core material | | Monomers and their amounts used in the preparation of the shell layer material | | | | Solid content | Tg1 | Tg2 | Viscosity mPa·s | Dv50 nm |
|---|---|---|---|---|---|---|---|---|---|---|---|
| Example 1 | Styrene 50g | Butadiene 25g | Styrene 50g | Butadiene 25g | Methacrylic acid 10g | Methyl methacrylate 15g | 45% | - 30°C | 80°C | 100 | 500 |
| Example 2 | Styrene 50g | Butadiene 20g | Styrene 50g | Butadiene 20g | Methacrylic acid 5g | Methyl methacrylate 20g | 43.5% | -0°C | 90°C | 100 | 500 |
| Example 3 | Styrene 50g | Butadiene 40g | Styrene 50g | Butadiene 40g | Methacrylic acid 15g | Methyl methacrylate 10g | 48.8 % | - 50°C | 60°C | 100 | 500 |
| Example 4 | Styrene 50g | Butadiene 25g | Styrene 50g | Butadiene 25g | Acrylic acid 10g | Ethylhexyl ester 15g | 45% | - 30°C | 100°C | 100 | 400 |
| Example 5 | Styrene 50g | Butadiene 25g | Styrene 50g | Butadiene 25g | Maleic acid 10g | Vinyl acetate 15g | 45% | - 30°C | 60°C | 200 | 300 |
| Example 6 | Styrene 50g | Butadiene 25g | Styrene 50g | Butadiene 25g | Fumaric acid 10g | Isooctyl acrylate 15g | 45% | - 30°C | 70°C | 200 | 600 |
| Example 7 | Styrene 50g | Butadiene 25g | Styrene 50g | Butadiene 25g | Itaconic acid 10g | Hydroxyethyl acrylate 15g | 45% | - 30°C | 65°C | 200 | 500 |
| Example 8 | Styrene 50g | Butadiene 25g | Styrene 50g | Butadiene 25g | Itaconic acid 10g | Isobornyl methacrylate 15g | 45% | - 30°C | 70°C | 150 | 100 |
| Example 9 | Styrene 50g | Butadiene 25g | Styrene 50g | Butadiene 25g | Methacrylic acid 10g | Vinyl versatate 15g | 45% | - 30°C | 60°C | 150 | 600 |
| Example 10 | Styrene 50g | Butadiene 25g | Styrene 50g | Butadiene 25g | Methacrylic acid 10g | Butyl acrylate 15g | 45% | - 30°C | 65°C | 10 | 500 |
| Example 11 | Styrene 50g | Butadiene 25g | Styrene 50g | Butadiene 25g | Methacrylic acid 10g | Acrylonitrile 15g | 45% | - 30°C | 100°C | 20 | 300 |
| Example 12 | Styrene 50g | Butadiene 25g | Styrene 50g | Butadiene 25g | Methacrylic acid 10g | Ethyl acrylate 15g | 45% | - 30°C | 85°C | 50 | 400 |
| Example 13 | Styrene 50g | Butadiene 25g | Styrene 50g | Butadiene 25g | Methacrylic acid 10g | n-Butyl acrylate 15g | 45% | - 30°C | 90°C | 80 | 1000 |
| Example 14 | Styrene 50g | Butadiene 25g | Styrene 50g | Butadiene 25g | Methacrylic acid 10g | Isobutyl acrylate 15g | 45% | - 30°C | 95°C | 200 | 900 |
| Comparative example 1 | Styrene 50g | Butadiene 25g | / | / | / | / | 26.5% | - 30°C | / | 100 | 200 |
| Comparative example 2 | / | / | Styrene 50g | Butadiene 25g | Methacrylic acid 10g | Methyl methacrylate 15g | 32.2% | / | 80°C | 300 | 300 |
| Comparative example 3 | Styrene 50g | Butadiene 25g | Styrene 50g | Butadiene 25g | Methacrylic acid 1g | Methyl methacrylate 5g | 41% | - 30°C | 0°C | 5 | 50 |
| Comparative example 4 | Styrene 50g | Butadiene 25g | Styrene 50g | Butadiene 25g | Methacrylic acid 20g | Methyl methacrylate 25g | 46.5% | - 30°C | 150°C | 300 | 1100 |

Here: in Table 1, Tg1 represents the glass transition temperature of the inner core material, and Tg2 represents the glass transition temperature of the shell layer material. Viscosity refers to the viscosity at 25°C of an aqueous solution of the binder at 1% solid content

### II, Preparation of the highly viscous sodium carboxymethyl cellulose

### Example 15:

1) A cotton fiber was crushed, the crushed cotton fiber was mixed with ethanol and water, charged into a reactor, and an aqueous solution of sodium hydroxide was added. After the feeding, the air inside the reactor was removed, so that the vacuum degree of the reactor reached -0.08MPa, and an inert gas was filled into the reactor, so that the internal pressure of the reactor was greater than 0.02 MPa, the operations of vacuumizing and filling with the inert gas were repeated for 2-3 times to evacuate the air inside the reactor, and it was stirred to alkalize for 70min at an alkalinization temperature of 30°C; wherein the mass ratio of water to the cotton fiber was 0.5:1, the mass ratio of ethanol to the cotton fiber was 1.5:1, the mass percentage concentration of the aqueous solution of sodium hydroxide was 40%, and the mass ratio of the aqueous solution of sodium hydroxide to the cotton fiber was 0.8:1;
2) An ethanol solution of chloroacetic acid was uniformly sprayed into the reactor, the air inside the reactor was removed, so that the vacuum degree of the reactor reached -0.08MPa, and an inert gas was filled into the reactor, so that the internal pressure of the reactor was greater than 0.02 MPa, and the temperature of the reactor was raised to 80°C to carry out etherification reaction for 50min; wherein the mass percentage concentration of the ethanol solution of chloroacetic acid was 70%, and the mass ratio of the ethanol solution of chloroacetic acid to the cotton fiber was 1.2:1;
3) After the etherification reaction was completed, the material was cooled to 50°C and added to an alcohol with a volume concentration of 60%, and the pH was adjusted to neutral with hydrochloric acid. After two washes and two centrifugations, the material was dried in a vacuum rake dryer, and the moisture content of the material was measured to be 33%. An alcoholic solution of glyoxal was added by uniformly spraying, the alcohol used was an alcohol with a volume concentration of 65%, and the substitution reaction was carried out at a controlled temperature of 55°C for 60 min, while the residual alcohol was recovered under a vacuum negative pressure (-0.02MPa), and after post-processing such as oven drying and crushing, the highly viscous sodium carboxymethyl cellulose was obtained; wherein the mass ratio of the product after the etherification reaction to glyoxal was 100:0.6.

### Examples 16-20

Examples 16-20 were essentially the same as Example 15, except that: at least one of the amount of ethanol used, the amount of water used, the concentration of the aqueous solution of sodium hydroxide, the amount of the aqueous solution of sodium hydroxide used, the time of the alkalization reaction and the temperature of the alkalization reaction in step 1); and/or the concentration of the ethanol solution of chloroacetic acid, the amount of the ethanol solution of chloroacetic acid used, the time of the etherification reaction and the temperature of the etherification reaction in step 2); and/or the type/usage amount of the substituting agent, the time of the substitution reaction and the temperature of the substitution reaction in step 3) was different, and specifically as shown in Table 2 below.

### Example 21

The difference between Example 21 and Example 15 was that: only the alkalization reaction and the etherification reaction were carried out without the substitution reaction, the alkalization reaction was carried out according to the same alkalization method as step 1) in Example 15, and the etherification reaction was carried out according to the same etherification method as step 2) in Example 15. Specific description is as shown in Table 2 below.

### Performance testing of the highly viscous sodium carboxymethyl cellulose

The aqueous solutions of the highly viscous sodium carboxymethyl cellulose at 1% solid content in Examples 15-21 were tested for their viscosities at 25°C. The test method was as follows:
The highly viscous sodium carboxymethyl cellulose to be measured with a dry weight of 5.0g were weighed, and pure water was added until the total weight of the highly viscous sodium carboxymethyl cellulose to be measured and the pure water was 500g, which was stirred and dissolved for 2h to completely disperse the highly viscous sodium carboxymethyl cellulose to be measured uniformly, and then measured, wherein different viscosities corresponded to different rotors. Detection temperature: 25±1°C; rotor used and rotating speed: 63# rotor, 12 r/min, taking the 6th minute value; equipment model: DV-2TLV Brookfield viscometer.

The viscosities of the highly viscous sodium carboxymethyl cellulose prepared in Examples 15-20 and Comparative examples 5-6 as well as the usage amounts and parameter settings during preparation are shown in Table 2 below.

**Table 2**

| Groups | Step 1) | | | | Step 2) | | Step 3) | | | |
|---|---|---|---|---|---|---|---|---|---|---|
| | Mass ratio of water to the cotton fiber | Mass ratio of ethanol to the cotton fiber | The concentrati on of the aqueous solution of sodium hydroxide and its mass ratio to the cotton fiber | Tempera ture and time of the alkalizat ion reaction | The mass percentage concentration of the ethanol solution of chloroacetic acid and its mass ratio to the cotton fiber | Temperature and time of the etherification reaction | Type of the substitutin g agent | The mass ratio of the product to the substituting agent in step 2) | Temperatu re and time of the substitutio n reaction | Viscosity mPa·s |
| Example 15 | 0.5:1 | 1.5:1 | 40%, 0.8:1 | 30°C, 70min | 70%, 1.2:1 | 80°C, 50min | Glyoxal | 100:0.6 | 55°C, 60min | 15000 |
| Example 16 | 0.8:1 | 1.0:1 | 30%, 1.0:1 | 40°C, 30min | 50%, 1.0:1 | 90°C, 40min | Glyoxal | 100:0.6 | 70°C, 20min | 10000 |
| Example 17 | 0.3:1 | 2.0:1 | 55%, 0.6:1 | 10°C, 80min | 80%, 1.5:1 | 60°C, 70min | Glyoxal | 100:0.6 | 30°C, 120min | 20000 |
| Example 18 | 0.5:1 | 1.5:1 | 40%, 0.8:1 | 30°C, 70min | 70%, 1.2:1 | 80°C, 50min | Glyoxal | 100:0.2 | 55°C, 60min | 15000 |
| Example 19 | 0.5:1 | 1.5:1 | 40%, 0.8:1 | 30°C, 70min | 70%, 1.2:1 | 80°C, 50min | Glyoxal | 100:1.2 | 55°C, 60min | 15000 |
| Example 20 | 0.5:1 | 1.5:1 | 40%, 0.8:1 | 30°C, 70min | 70%, 1.2:1 | 80°C, 50min | Glutaralde hvde | 100:0.6 | 55°C, 60min | 15000 |
| Example 21 | 0.5:1 | 1.5:1 | 40%, 0.8:1 | 30°C, 70min | 70%, 1.2:1 | 80°C, 50min | / | / | / | 15000 |

Wherein: the viscosity in Table 2 refers to the viscosity at 25°C of the aqueous solution of the highly viscous sodium carboxymethyl cellulose at 1% solid content.

### II, Preparation of the negative electrode slurry

### Example 22:

95.9g of negative electrode active substance graphite, 0.16g of the highly viscous sodium carboxymethyl cellulose prepared in Example 15 and 2.0g of conductive agent carbon black (SP) were mixed at 200rpm for 15min, stirred uniformly, then 43.54g of deionized water was added, stirred at a rotational speed of 300rpm and kneaded for 60min to obtain a well-infiltrated graphite agglomerate; then 0.64g of the highly viscous sodium carboxymethyl cellulose was added, stirred at a rotational speed of 300rpm for 5min, then 43.54g of deionized water was added, and then dispersed at a rotational speed of 1200rpm for 60min, then 2.89g of the binder-containing emulsion prepared in Example 1 was added, and stirred at 800rpm for 30min to obtain the negative electrode slurry.

### Examples 23-32 and Examples 34-56

Examples 23-32 and Examples 34-56 were essentially the same as Example 21, except that: at least one of the amount of the negative electrode active substance used, the type and/or usage amount of the binder and the type and/or usage amount of the highly viscous sodium carboxymethyl cellulose was different, specifically as shown in Table 3 below.

### Example 33

The difference between Example 33 and Example 22 was that: a 2h stirring process was used, and the preparation process was specifically as follows:
95.9g of negative electrode active substance graphite, 0.16g of the highly viscous sodium carboxymethyl cellulose and 2.0g of conductive agent carbon black were mixed at 200rpm for 5min, stirred uniformly, then 43.54g of deionized water was added, stirred at a rotational speed of 800rpm and kneaded for 30min to obtain a well-infiltrated graphite agglomerate; then 0.64g of the highly viscous sodium carboxymethyl cellulose was added, stirred at a rotational speed of 300rpm for 5min, then 43.54g of deionized water was added, and then dispersed at a rotational speed of 1200rpm for 50min, then 4.0g of the binder-containing emulsion was added, and stirred at 800rpm for 30min to obtain the negative electrode slurry; wherein the solid content of the binder-containing emulsion was 45%.

### Comparative examples 7-11

Comparative examples 7-11 were essentially the same as Example 22, except that: at least one of the amount of the negative electrode active substance used, the type and/or usage amount of the binder and the type and/or usage amount of the highly viscous sodium carboxymethyl cellulose was different, specifically as shown in Table 3 below.

### Performance testing of the negative electrode slurry

The negative electrode slurries prepared in Examples 22-56 and Comparative examples 7-11 were tested for slurry stability, and the specific test process was as follows:
At 25°C, after the delivery viscosity of the negative electrode slurry met the coating specification of 3000-20000mPa.s, 500mL of the slurry was taken out and allowed to stand, the viscosity of the negative electrode slurry was tested every 4h, and the settlement amount of the main material at the bottom of the slurry was scraped and measured with a steel plate every 12h. The measurement was stopped after 24h.

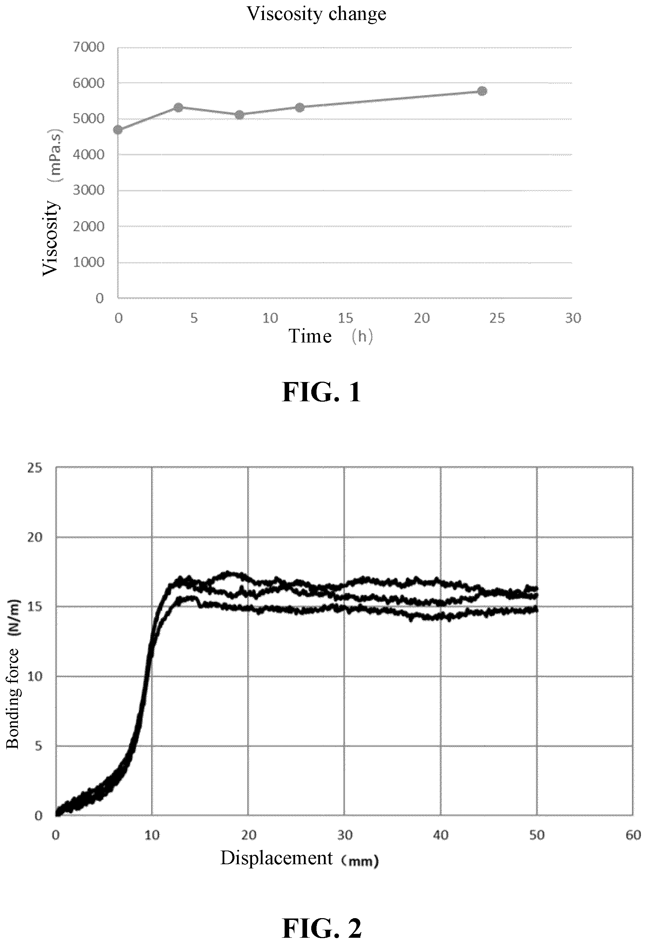

The viscosity-time curve of the negative electrode slurry in Example 23 is as shown in Fig. 1, in which the abscissa shows the test time, and the ordinate shows the viscosity value of the negative electrode slurry. As can be seen from Fig. 1, when the negative electrode slurry was left standing for 24h, the viscosity of the negative electrode slurry was almost unchanged, indicating that the viscosity stability of the negative electrode slurry was good.

The parameter settings during the preparation of the negative electrode slurry and the slurry stability test results in Examples 22-56 and Comparative examples 7-11 are shown in Table 3.

**Table 3**

| Groups | Components of the negative electrode active substance layer | | | | | | Stirring process | Slurry stability |
|---|---|---|---|---|---|---|---|---|
| | Amount of graphite used % | Type of the binder | Usage amount of the binder % | Type of the highly viscous CMC | Usage amount of the highly viscous CMC % | Usage amount of SP % | | |
| Example 22 | 95.9% | Binder in Example 1 | 1.30% | Highly viscous CMC in Example 15 | 0.80% | 2.00% | Conventional process | Good |
| Example 23 | 95.7% | Binder in Example 1 | 1.50% | Highly viscous CMC in Example 15 | 0.80% | 2.00% | Conventional process | Good |
| Example 24 | 95.4% | Binder in Example 1 | 1.80% | Highly viscous CMC in Example 15 | 0.80% | 2.00% | Conventional process | Good |
| Example 25 | 95.1% | Binder in Example 1 | 2.10% | Highly viscous CMC in Example 15 | 0.80% | 2.00% | Conventional process | Good |
| Example 26 | 95.6% | Binder in Example 1 | 1.80% | Highly viscous CMC in Example 15 | 0.60% | 2.00% | Conventional process | Good |
| Example 27 | 95.3% | Binder in Example 1 | 1.80% | Highly viscous CMC in Example 15 | 0.90% | 2.00% | Conventional process | Good |
| Example 28 | 95.2% | Binder in Example 1 | 1.80% | Highly viscous CMC in Example 15 | 1.00% | 2.00% | Conventional process | Good |
| Example 29 | 95.0% | Binder in Example 1 | 1.80% | Highly viscous CMC in Example 15 | 1.20% | 2.00% | Conventional process | Good |
| Example 30 | 95.2% | Binder in Example 1 | 1.80% | Highly viscous CMC in Example 16 | 1.00% | 2.00% | Conventional process | Good |
| Example 31 | 95.2% | Binder in Example 1 | 1.80% | Highly viscous CMC in Example 15 | 1.00% | 2.00% | Conventional process | Good |
| Example 32 | 95.2% | Binder in Example 1 | 1.80% | Highly viscous CMC in Example 17 | 1.00% | 2.00% | Conventional process | Good |
| Example 33 | 95.4% | Binder in Example 1 | 1.80% | Highly viscous CMC in Example 15 | 0.80% | 2.00% | 2h stirring process | Good |
| Example 34 | 95.8% | Binder in Example 1 | 1.80% | Highly viscous CMC in Example 15 | 0.40% | 2.00% | Conventional process | Poor |
| Example 35 | 96.2% | Binder in Example 1 | 1.00% | Highly viscous CMC in Example 15 | 0.80% | 2.00% | Conventional process | Poor |
| Example 36 | 94.9% | Binder in Example 1 | 230% | Highly viscous CMC in Example 15 | 0.80% | 2.00% | Conventional process | Poor |
| Example 37 | 95.3% | Binder in Example 1 | 1.30% | Highly viscous CMC in Example 15 | 1.40% | 2.00% | Conventional process | Poor |
| Example 38 | 96.3% | Binder in Example 1 | 1.30% | Highly viscous CMC in Example 15 | 0.40% | 2.00% | Conventional process | Poor |
| Example 39 | 95.9% | Binder in Example 1 | 1.30% | Conventional CMC | 0.80% | 2.00% | Conventional process | Poor |
| Example 40 | 95.9% | Binder in Example 2 | 1.30% | Highly viscous CMC in Example 15 | 0.80% | 2.00% | Conventional process | Good |
| Example 41 | 95.9% | Binder in Example 3 | 1.30% | Highly viscous CMC in Example 15 | 0.80% | 2.00% | Conventional process | Good |
| Example 42 | 95.9% | Binder in Example 4 | 1.30% | Highly viscous CMC in Example 15 | 0.80% | 2.00% | Conventional process | Good |
| Example 43 | 95.9% | Binder in Example 5 | 1.30% | Highly viscous CMC in Example 15 | 0.80% | 2.00% | Conventional process | Good |
| Example 44 | 95.9% | Binder in Example 6 | 1.30% | Highly viscous CMC in Example 15 | 0.80% | 2.00% | Conventional process | Good |
| Example 45 | 95.9% | Binder in Example 7 | 1.30% | Highly viscous CMC in Example 15 | 0.80% | 2.00% | Conventional process | Good |
| Example 46 | 95.9% | Binder in Example 8 | 1.30% | Highly viscous CMC in Example 15 | 0.80% | 2.00% | Conventional process | Good |
| Example 47 | 95.9% | Binder in Example 9 | 1.30% | Highly viscous CMC in Example 15 | 0.80% | 2.00% | Conventional process | Good |
| Example 48 | 95.9% | Binder in Example 10 | 1.30% | Highly viscous CMC in Example 15 | 0.80% | 2.00% | Conventional process | Good |
| Example 49 | 95.9% | Binder in Example 11 | 1.30% | Highly viscous CMC in Example 15 | 0.80% | 2.00% | Conventional process | Good |
| Example 50 | 95.9% | Binder in Example 12 | 1.30% | Highly viscous CMC in Example 15 | 0.80% | 2.00% | Conventional process | Good |
| Example 51 | 95.9% | Binder in Example 13 | 1.30% | Highly viscous CMC in Example 15 | 0.80% | 2.00% | Conventional process | Good |
| Example 52 | 95.9% | Binder in Example 14 | 1.30% | Highly viscous CMC in Example 15 | 0.80% | 2.00% | Conventional process | Good |
| Example 53 | 95.9% | Binder in Example 1 | 1.30% | Highly viscous CMC in Example 18 | 0.80% | 2.00% | Conventional process | Good |
| Example 54 | 95.9% | Binder in Example 1 | 1.30% | Highly viscous CMC in Example 19 | 0.80% | 2.00% | Conventional process | Good |
| Example 55 | 95.9% | Binder in Example 1 | 1.30% | Highly viscous CMC in Example 20 | 0.80% | 2.00% | Conventional process | Good |
| Example 56 | 95.9% | Binder in Example 1 | 1.30% | CMC in Comparative example 5 | 0.80% | 2.00% | Conventional process | Good |
| Comparative example 7 | 94.7% | Styrene-butadiene rubber | 2.10% | Conventional CMC | 1.20% | 2.00% | Conventional process | Good |
| Comparative example 8 | 95.9% | Binder in Comparative example 1 | 1.30% | Conventional CMC | 0.80% | 2.00% | Conventional process | Poor |
| Comparative example 9 | 95.9% | Binder in Comparative example 2 | 1.30% | Conventional CMC | 0.80% | 2.00% | Conventional process | Poor |
| Comparative example 10 | 95.9% | Binder in Comparative example 3 | 1.30% | Conventional CMC | 0.80% | 2.00% | Conventional process | Poor |
| Comparative example 11 | 95.9% | Binder in Comparative example 4 | 1.30% | Conventional CMC | 0.80% | 2.00% | Conventional process | Poor |

Wherein: in Table 3, highly viscous CMC represents the highly viscous sodium carboxymethyl cellulose, and conventional CMC represents a conventional sodium carboxymethyl cellulose. The conventional process refers to the preparation process of the negative electrode slurry used in Example 22, and the 2h stirring process refers to the preparation process of the negative electrode slurry used in Example 33. The viscosity of a conventional CMC is 5000 mPa·s.

### III, Preparation of the negative electrode plate

The negative electrode slurry in Examples 22-56 and Comparative examples 7-11 were uniformly coated on a negative electrode current collector copper foil, respectively, with the weight on one side being controlled at 60-80mg/1540.25mm², followed by oven drying, cold pressing and slitting to obtain the negative electrode plate.

### Performance testing of the negative electrode plate

The negative electrode plates in Examples 22-56 and Comparative examples 7-11 were tested for the electrode sheet bonding force, and the bonding force test results are shown in Table 4 below. The specific test method was as follows:
At 25°C, the negative electrode plate was taken as the electrode sheet to be tested, an electrode sheet sample with a width of 30mm and a length of 100-160mm was cut out by a blade, a special double-sided adhesive tape with a width of 20mm and a length of 90-150mm was attached to a steel plate, the electrode sheet sample that was cut out was attached to the double-sided adhesive tape with the test surface facing downwards, and then a pressure roller was used to roll in a same direction for three times, a paper tape with a width equal to the width of the electrode sheet sample and a length being 80-200mm longer than that of the electrode sheet sample was inserted under the electrode sheet sample, and they were fixed with a masking tape; the power source of a tensile machine was turned on, the indicator light was on, and a position-limit block was adjusted to a suitable position; the end of the steel plate that was not attached to the electrode sheet sample was fixed with a lower clamp, the paper tape was folded upwards and fixed with an upper clamp, and the position of the upper clamp was adjusted by the "up" and "down" buttons on the manual controller attached by the tensile machine; a special computer linked to the tensile machine was started, and the desktop software icon was double-clicked to make test; the tensile rate was 50m/min, the test distance was 50mm, and the software took one data point every 10s.

The bonding force of the negative electrode plate in Example 23 was measured in parallel for three times, the bonding force-time curve of the negative electrode plate in Example 23 is shown in Fig. 2, wherein the ordinate represents the bonding force, and the abscissa represents the test distance. As can be seen from Fig. 2, the average value of the bonding forces of the negative electrode plate in Example 23 in three measurements was higher than 15N/m, indicating that the bonding force of the negative electrode plate was good.

### IV, Preparation of the battery cell

1, Preparation of the positive electrode sheet: the positive electrode active material LiNi_{0.8}Co_{0.1}Mn_{0.1}O₂ (NCM811), the binder polyvinylidene fluoride (PVDF) and the conductive agent acetylene black in a mass ratio of 97%:1.5%:1.5% were dissolved in the solvent N-methyl pyrrolidone (NMP), fully stirred and uniformly mixed to prepare a positive electrode slurry; and the positive electrode slurry was uniformly coated on the positive electrode current collector aluminum foil, and the positive electrode sheet was obtained after oven drying, cold pressing and slitting.
2, Separator: a polyethylene film (PE) with a thickness of 12µm was used as the separator.
3, Preparation of the electrolyte solution: ethylene carbonate (EC), ethyl methyl carbonate (EMC) and diethyl carbonate (DEC) were mixed in a volume ratio of 1:1:1, and then LiPF6 was uniformly dissolved in the above-mentioned solution to obtain the electrolyte solution. The concentration of LiPF₆ in the electrolyte solution was 1 mol/L.
4, Preparation of the battery cell: the above-mentioned positive electrode sheet, the separator, the negative electrode plate prepared in Examples 22-56 and Comparative examples 7-11, and a spacer liquid were assembled into a small soft packaged battery cell.

### Performance testing of the battery cell

The battery cells prepared in Examples 22-56 and Comparative examples 7-11 were tested for direct current impedance, and the specific test process was as follows:
At 25°C, the battery corresponding to Example 1 was charged to 4.2V at a constant current of 1C, and then charged to a current of 0.05C at a constant voltage of 4.2V, and after standing for 5min, it was discharged at a constant current of 1C for 12min, and a voltage V1 was recorded. After standing for 5min, it was placed at -10°C for 2h, then discharged at 15C for 10s, a voltage V2 was recorded, and the DCR of the battery cell was obtained according to (V2-V1)/15C.

Based on the DCR of the battery cell in Comparative example 7, the internal resistance increase ratios of the battery cells in Examples 22-56 and Comparative examples 7-11 were calculated. Taking Example 22 as an example, the internal resistance increase ratio of the battery cell in Example 22= DCR (Example 22)/DCR (Comparative example 7)*100%, and the internal resistance increase ratios of the battery cells in other Examples were calculated as described above. The results of the internal resistance increase ratios of the battery cells in Examples 22-56 and Comparative examples 7-11 are shown in Table 4 below.

Fig. 3 is a histogram of the discharge DCRs of the battery cells in Example 24, Example 25, Example 26 and Comparative example 7. As can be seen from Fig. 3, the DCR of the battery cell was significantly reduced, indicating that the kinetic performance of the battery cell was significantly improved.

The performance test results of the negative electrode plates and the performance test results of the battery cells in Examples 22-56 and Comparative examples 7-11 are shown in Table 4 below.

**Table 4**

| Groups | Tare weight of the negative electrode (mg/1540.25mm²) | Bonding force of the electrode sheet (VS base) | Performance parameters of the battery cell DC DCR 80%SOC (VS base) |
|---|---|---|---|
| Example 22 | 60-80 | 90% | 90% |
| Example 23 | 60-80 | 95% | 92% |
| Example 24 | 60-80 | 100% | 94% |
| Example 25 | 60-80 | 105% | 96% |
| Example 26 | 60-80 | 90% | 92% |
| Example 27 | 60-80 | 100% | 95% |
| Example 28 | 60-80 | 100% | 96% |
| Example 29 | 60-80 | 100% | 98% |
| Example 30 | 60-80 | 100% | 98% |
| Example 31 | 60-80 | 100% | 96% |
| Example 32 | 60-80 | 100% | 98% |
| Example 33 | 60-80 | 100% | 94% |
| Example 34 | 60-80 | 45% | 102% |
| Example 35 | 60-80 | 65% | 110% |
| Example 36 | 60-80 | 120% | 130% |
| Example 37 | 60-80 | 95% | 110% |
| Example 38 | 60-80 | 20% | 120% |
| Example 39 | 60-80 | 80% | 110% |
| Example 40 | 60-80 | 90% | 91% |
| Example 41 | 60-80 | 90% | 92% |
| Example 42 | 60-80 | 90% | 94% |
| Example 43 | 60-80 | 90% | 94% |
| Example 44 | 60-80 | 90% | 95% |
| Example 45 | 60-80 | 90% | 92% |
| Example 46 | 60-80 | 90% | 94% |
| Example 47 | 60-80 | 90% | 95% |
| Example 48 | 60-80 | 90% | 95% |
| Example 49 | 60-80 | 90% | 95% |
| Example 50 | 60-80 | 90% | 95% |
| Example 51 | 60-80 | 90% | 94% |
| Example 52 | 60-80 | 90% | 94% |
| Example 53 | 60-80 | 90% | 97% |
| Example 54 | 60-80 | 90% | 97% |
| Example 55 | 60-80 | 90% | 98% |
| Example 56 | 60-80 | 90% | 98% |
| Comparative example 7 | 60-80 | 100% | 100% |
| Comparative example 8 | 60-80 | 30% | 150% |
| Comparative example 9 | 60-80 | 40% | 140% |
| Comparative example 10 | 60-80 | 30% | 150% |
| Comparative example 11 | 60-80 | 30% | 130% |

Here, the tare weight of the negative electrode in Table 4 refers to the weight of the negative electrode plate per unit area.

As can be seen from Example 1 and Comparative examples 3-4 in Table 1, by optimizing the amounts of unsaturated acid monomer and unsaturated ester monomer used in the preparation of the shell layer material of the binder, the glass transition temperature of the shell layer material can fall within the required range of the binder.

As can be seen from Example 39 and Comparative examples 7-11 in Tables 1-4, by providing the binder in Example of the present invention in the negative electrode active substance layer of the negative electrode plate, the electrode sheet bonding force of the negative electrode plate can be increased to meet the processability of the negative electrode plate; and at the same time, the direct current internal resistance of the battery cell can be reduced, thereby improving the dynamic performance of the battery cell.

As can be seen from Examples 22-38 and Examples 40-56, by providing both the binder and the highly viscous sodium carboxymethyl cellulose in Example of the present invention in the negative electrode active substance layer of the negative electrode plate, the electrode sheet bonding force of the negative electrode plate can be further increased to meet the processability of the negative electrode plate; and at the same time, the direct current internal resistance of the battery cell is further reduced, and the kinetic performance of the battery cell is improved. In particular, by further optimizing the amounts of the binder and the highly viscous sodium carboxymethyl cellulose in Example of the present invention used in the negative electrode active substance layer, higher electrode sheet bonding force and lower direct current internal resistance of the battery cell can be achieved.

The difference between Examples 22-25 and Examples 35-36 is that: the mass proportion of the binder in the negative electrode active substance layer is different; preferably, when the mass proportion of the binder is 1.3%-2.1%, the processability of the negative electrode plate is good, while the kinetic performance of the battery cell is excellent; more preferably, the mass proportion of the binder is 1.5%-2.1%; and further preferably, the mass proportion of the binder is 7.8%-2.1%.

The difference between Examples 26-33 and Examples 37-38 is that: the mass proportion of the highly viscous sodium carboxymethyl cellulose in the negative electrode active substance layer is different; preferably, when the mass proportion of the highly viscous sodium carboxymethyl cellulose is 0.6%-1.0%, the processability of the negative electrode plate is good, while the kinetic performance of the battery cell is excellent; more preferably, the mass proportion of the highly viscous sodium carboxymethyl cellulose is 0.6%-1.0%; and further preferably, the mass proportion of the highly viscous sodium carboxymethyl cellulose is 0.9%-1.0%.

The difference between Example 24 and Example 33 is that: the stirring process is different, and the negative electrode slurry prepared by using the binder and the highly viscous sodium carboxymethyl cellulose in Example of the present invention can meet the 2h negative electrode stirring-slurrying process and increase the stirring productivity.

While the above description merely provides specific embodiments of the present application, the scope of protection of the present application is not limited thereto. Any person skilled in the art may easily conceive of various equivalent modifications or replacements without departing from the technical scope disclosed in the present application. All these modifications or replacements should be encompassed within the scope of protection of the present application. Therefore, the scope of the present application shall be determined with reference to the scope of the claims.

## Claims

1. A binder, comprising:
an inner core material having a glass transition temperature of -50°C-0°C; and
a shell layer material located on at least part of the surface of the inner core material and having a glass transition temperature of 60°C-100°C.

2. The binder of claim 1, wherein the shell layer material has a polar group.

3. The binder of claims 1 to 2, wherein the inner core material comprises a copolymer of styrene monomer unit-butadiene monomer unit.

4. The binder of any one of claims 1 to 3, wherein the shell layer material comprises a copolymer of styrene monomer unit-butadiene monomer unit-unsaturated acid monomer unit-unsaturated ester monomer unit.

5. The binder of claim 4, wherein the monomer corresponding to the unsaturated acid monomer unit comprises a substituted or unsubstituted unsaturated acid containing -C=C- and having 3-6 carbon atoms;
optionally, the monomer corresponding to the unsaturated acid monomer unit comprises one or more of acrylic acid, methacrylic acid, maleic acid, fumaric acid and itaconic acid.

6. The binder of any one of claims 4 to 5, wherein the monomer corresponding to the unsaturated ester monomer unit comprises a substituted or unsubstituted unsaturated ester containing -C=C-;
optionally, the monomer corresponding to the unsaturated ester monomer unit comprises one or more of methyl methacrylate, ethylhexyl ester, vinyl acetate, isooctyl acrylate, hydroxyethyl acrylate, isobornyl methacrylate, vinyl versatate, butyl acrylate, acrylonitrile, ethyl acrylate, n-butyl acrylate and isobutyl acrylate.

7. The binder of any one of claims 1 to 6, wherein the viscosity at 25°C of an aqueous solution of the binder at 45% solid content is 10 mPa·s-200 mPa·s.

8. The binder of any one of claims 1 to 7, wherein the volume average particle diameter Dv50 of the binder is 100 nm-1000 nm.

9. A preparation method of the binder of any one of claims 4 to 8, comprising the following steps:
S11, styrene monomer is polymerized with butadiene monomer to prepare the inner core material; and
S12, styrene monomer, butadiene monomer, unsaturated acid monomer and unsaturated ester monomer are polymerized on the surface of the inner core material.

10. The preparation method of the binder according to claim 9, wherein in the polymerization reaction for preparing the inner core material, the mass ratio of the styrene monomer to the butadiene monomer is 10:(4-8).

11. The preparation method of the binder according to any one of claims 9 to 10, wherein in the polymerization reaction for preparing the shell layer material, the mass ratio of the styrene monomer, the butadiene monomer, the unsaturated acid monomer to the unsaturated ester monomer is 10:(4-8):(1-3):(2-4).

12. A binder composition, comprising the binder of any one of claims 1 to 8 or the binder prepared by the method of any one of claims 9 to 11 and highly viscous sodium carboxymethyl cellulose, and the viscosity at 25°C of an aqueous solution of the highly viscous sodium carboxymethyl cellulose at 1% solid content is 10000 mPa·s-20000 mPa·s.

13. The binder composition of claim 12, wherein the mass ratio of the binder to the highly viscous sodium carboxymethyl cellulose is (1.1-3.5): 1.

14. The binder composition of any one of claims 12 to 13, wherein a hydrogen atom on a hydroxyl group in the highly viscous sodium carboxymethyl cellulose is substituted with a substituting agent, and the substituting agent reacts with the hydroxyl group to generate a hemiacetal;
optionally, the substituting agent comprises a dialdehyde monomer; and further optionally, the dialdehyde monomer comprises one or two of glyoxal and glutaraldehyde.

15. A negative electrode slurry, comprising the binder of any one of claims 1 to 8, the binder prepared by the method of any one of claims 9 to 11 or the binder composition of any one of claims 12 to 14.

16. A preparation method of the negative electrode slurry of claim 15, wherein the negative electrode slurry comprises the binder composition, and the preparation method comprises the following steps:
S21, a negative electrode active substance agglomerate is prepared from a negative electrode active substance, a part of the highly viscous sodium carboxymethyl cellulose, a conductive agent and a part of a solvent; and
S22, the remaining part of the highly viscous sodium carboxymethyl cellulose, the remaining part of the solvent and the binder are added to the negative electrode active substance agglomerate to prepare the negative electrode slurry.

17. The preparation method of the negative electrode slurry according to claim 16, further comprising the step of preparing the highly viscous sodium carboxymethyl cellulose, which comprises:
S201, a cotton fiber and an alkalizing agent are subjected to alkalization reaction in a mixed solution of ethanol and water;
5202, after the alkalization reaction is finished, an etherifying agent is added to the reaction system to cause etherification reaction;
S203, an etherification reaction product and the substituting agent are subjected to substitution reaction to prepare the highly viscous sodium carboxymethyl cellulose;
optionally, the substituting agent comprises a dialdehyde monomer; and further optionally, the dialdehyde monomer comprises one or two of glyoxal and glutaraldehyde.

18. The preparation method of the negative electrode slurry according to claim 17, wherein step S203 satisfies at least one of the following conditions I-III:
I, the mass ratio of the etherification reaction product to the substituting agent is 100:(0.2-1.0);
II, the temperature of the substitution reaction is 30-70°C;
III, the time of the substitution reaction is 20min-120min.

19. A negative electrode plate, comprising:
a negative electrode current collector; and
a negative electrode active substance layer located on at least one surface of the negative electrode current collector;
wherein the negative electrode active substance layer comprises the binder of any one of claims 1 to 8, the negative electrode binder prepared by the method of any one of claims 9 to 11, or the binder composition of any one of claims 12 to 14.

20. The negative electrode plate of claim 19, wherein the mass proportion of the binder in the negative electrode active substance layer is 1.3%-2.1%, optionally 1.5%-2.1%, and further optionally 1.8%-2.1%.

21. The negative electrode plate of claims 19 to 20, wherein the negative electrode active substance layer comprises the binder composition of any one of claims 12 to 14, the mass proportion of the highly viscous sodium carboxymethyl cellulose in the negative electrode active substance layer is 0.6%-1.2%, optionally 0.8%-1.2%, and further optionally 0.9%-1.2%.

22. A secondary battery, comprising the negative electrode plate of any one of claims 19 to 21.

23. A battery module, comprising the secondary battery of claim 22.

24. A battery pack, comprising the battery module of claim 23.

25. An electrical apparatus, comprising at least one of the secondary battery of claim 22, the battery module of claim 23, or the battery pack of claim 24.
